# EUROPEAN PATENT APPLICATION

(11) **EP 3 913 027 A1**
(43) Date of publication of application: **24.11.2021**
(21) Application number: 20741710.6
(22) Date of filing: 07.01.2020
(51) Int. Cl.: C09D 133/14, C09D 175/04, C09D 7/43

(54) **AQUEOUS COATING COMPOSITION AND METHOD FOR FORMING COATING FILM**

(30) Priority: 15.01.2019 JP 2019004417
(71) Applicant: Nippon Paint Industrial Coatings Co., Ltd., Tokyo 140-8675 (JP)
(72) Inventor: KUWAHARA, Shintaro, Osaka-shi, Osaka 531-8511 (JP); AZECHI, Kensaku, Osaka-shi, Osaka 531-8511 (JP); FURUYAMA, Naoki, Osaka-shi, Osaka 531-8511 (JP)
(74) Representative: Mewburn Ellis LLP
(86) International application number: PCT/JP2020/000135
(87) International publication number: WO 2020/149169

(57) **Abstract**

An object of the present invention is to provide an aqueous coating composition that has good coating workability and affords good finished appearance. The present invention relates to an aqueous coating composition comprising an aqueous base component (I) and a water-dispersible curing agent (II), wherein the aqueous base component (I) comprises an aqueous hydroxy group-containing resin dispersion (A), wherein the water-dispersible curing agent (II) comprises a water-dispersible polyisocyanate (B), and wherein the aqueous hydroxy group-containing resin dispersion (A) comprises an acrylic resin dispersion (A1), and an emulsion of an acrylic resin having a hydrophobic linear alkyl, branched alkyl, or alicyclic alkyl group with 4 to 6 carbon atoms (A2).

## Description

### TECHNICAL FIELD

The present invention relates to an aqueous coating composition and a method for forming a coating film.

### BACKGROUND ART

In recent years, the awareness of environmental load reduction is increasing, and replacement with environmentally friendly products has been required. In the field of coating materials, for example, it is required to reduce the usage amount of an organic solvent, and such a requirement can be satisfied with an aqueous coating composition using water as a solvent. Further, in the field of automobiles and the like, such a method is employed that a bake-curing coating composition is applied to an article, heated at a high temperature and cured to form a coating film.

On the other hand, when coating a large and thick article, for example, a heavy vehicle, especially a railroad vehicle, it is difficult to perform bake curing due to the high heat capacity of the article, and it is difficult to use a bake-curing coating composition. A normal temperature film forming coating composition has therefore been selected as it does not require a high temperature heating step and is capable of forming a coating film at a normal temperature at the time of coating those articles.

As a normal temperature film forming coating composition, for example, a two-component isocyanate curing coating composition is known (see Patent Literatures 1 and 2). Such a coating composition is a two-component curing coating composition, and comprises a solution of a compound having two or more isocyanate groups and a solution of a compound with two or more functional groups such as hydroxy groups that react with isocyanate group. The coating composition is to form a coating film by a curing reaction between isocyanate group and hydroxy group or the like. Further, the coating composition can undergo a curing reaction (a coating film formation) at normal temperature and does not require thermal curing.

### CITATIONS LIST

### PATENT LITERATURES

Patent Literature 1: JP 2008-101140 A
Patent Literature 2: JP 2018-154751 A

### SUMMARY OF INVENTION

### TECHNICAL PROBLEMS

However, since each of the heavy vehicles such as railroad vehicles is huge, coating booths like those used in the automobile field are not used when applying coating compositions, and heavy vehicles are coated at their manufacturing sites. In this case, for example, under a low temperature and/or high humidity condition, the applied coating composition sags due to a slow evaporation rate of water as a solvent, whereas under a high temperature and/or low humidity condition, the finished appearance of a resultant coating film is poor. Like these, problems with coating workability and/or the finished appearance of a coating film have occurred due to changes in the environment such as ambient temperature and humidity.

The above-cited Patent Literature 1 describes an aqueous coating material comprising a multilayer structure type synthetic resin emulsion (A) having a specific structure, a hydrophilic solvent (B) and a hydrophobic solvent (C). Patent Literature 1 describes that the film-forming stability is enhanced by the above configuration (paragraphs [0004] to [0005]). Patent Literature 2 describes an aqueous base coating material comprising acrylic core-shell particles, a melamine resin, an alkali swelling type viscosity modifier, a hydrophobic organic solvent and a hydrophilic organic solvent. Patent Literature 2 describes that a coating film can be formed with a high solid concentration, and superior sagging resistance and appearance quality by virtue of the above configuration (paragraphs [0005] to [0006]).

As described in Patent Literatures 1 and 2, various studies have been conventionally conducted on normal temperature curable aqueous coating compositions. However, higher performance levels of coating workability and finished appearance are becoming to be awaited even for an aqueous coating composition, and it is still difficult to satisfy both of the required performances.

The present invention is to solve the above-described conventional problems, and an object of the present invention is to provide an aqueous coating composition with excellent coating workability and excellent finished appearance, and a method for forming a coating film.

### SOLUTIONS TO PROBLEMS

In order to solve the above-described problems, the present invention provides the following embodiments.
[1] An aqueous coating composition comprising an aqueous base component (I) and a water-dispersible curing agent (II),
   wherein the aqueous base component (I) comprises an aqueous hydroxy group-containing resin dispersion (A),
   wherein the water-dispersible curing agent (II) comprises a water-dispersible polyisocyanate (B), and
   wherein the aqueous hydroxy group-containing resin dispersion (A) comprises
   an acrylic resin dispersion (A1) and
   an emulsion of an acrylic resin (A2) having a hydrophobic linear alkyl, branched alkyl, or alicyclic alkyl group with 4 to 6 carbon atoms.
[2] The aqueous coating composition mentioned above, wherein the emulsion of the acrylic resin (A2) is an emulsion polymer of a monomer mixture comprising a (meth)acrylate monomer having a hydrophobic linear alkyl, branched alkyl, or alicyclic alkyl group with 4 to 6 carbon atoms.
[3] The aqueous coating composition wherein the amount of the (meth)acrylate monomer having a hydrophobic linear alkyl, branched alkyl, or alicyclic alkyl group with 4 to 6 carbon atoms is in the range of 10 to 80 parts by mass per 100 parts by mass of the monomer mixture.
[4] The aqueous coating composition wherein the acrylic resin dispersion (A1) has a hydroxy value in the range of 5 to 200 mg KOH/g, an acid value in the range of 5 to 100 mg KOH/g, and a number-average molecular weight in the range of 1,000 to 100,000.
[5] The aqueous coating composition wherein the resin solid mass ratio of the acrylic resin dispersion (A1) to the acrylic resin emulsion (A2) is in the range of
   (A1) : (A2) = 95 : 5 to 50 : 50.
[6] The aqueous coating composition wherein at least one of the aqueous base component (I) and the water-dispersible curing agent (II) further comprises a viscosity modifier (C).
[7] A method for forming a coating film comprising a step of forming a coating film by applying the aqueous coating composition to an article and curing the aqueous coating composition.
[8] The method for forming a coating film, wherein the article is an industrial machine, a construction machine, a railroad vehicle, a hull, a building or a constructed structure.

### ADVANTAGEOUS EFFECTS OF INVENTION

The above-mentioned aqueous coating composition is a two-component aqueous coating composition and it is capable of achieving both coating workability and finished appearance of a coating film at a high level.

### DESCRIPTION OF EMBODIMENTS

The aqueous coating composition comprises an aqueous base component (I) and a water-dispersible curing agent (II). The aqueous base component (I) comprises an aqueous hydroxy group-containing resin dispersion (A) and the water-dispersible curing agent (II) comprises a water-dispersible polyisocyanate (B), wherein the aqueous hydroxy group-containing resin dispersion (A) comprises an acrylic resin dispersion (A1) and an emulsion of an acrylic resin (A2) having a hydrophobic linear alkyl, branched alkyl, or alicyclic alkyl group with 4 to 6 carbon atoms.

In the following, respective components are described in detail.

### Aqueous hydroxy group-containing resin dispersion (A)

The aqueous hydroxy group-containing resin dispersion (A) is a coating film-forming resin contained in the aqueous base component (I). The aqueous hydroxy group-containing resin dispersion (A) comprises an acrylic resin dispersion (A1) and a specific acrylic resin emulsion (A2).

### Acrylic resin dispersion (A1)

The acrylic resin dispersion (A1) is a coating film-forming resin contained in the aqueous base component (I), and is a dispersion of an acrylic resin with a hydroxy group. The acrylic resin dispersion (A1) preferably has a hydroxy value in the range of 5 to 200 mg KOH/g, an acid value in the range of 5 to 100 mg KOH/g, and a number-average molecular weight in the range of 1,000 to 100,000. Such an acrylic resin dispersion (A1) can be prepared by polymerizing a monomer mixture comprising an ethylenically unsaturated monomer.

As the ethylenically unsaturated monomer, a mixture prepared by mixing a hydroxy group-containing ethylenically unsaturated monomer that is necessary for obtaining the aforementioned hydroxy value, a carboxy group-containing ethylenically unsaturated monomer that is necessary for obtaining the aforementioned acid value, and other monomers in a ratio that affords the aforementioned physical properties.

Examples of the hydroxy group-containing ethylenically unsaturated monomer include 2-hydroxyethyl (meth)acrylate, 2-hydroxypropyl (meth)acrylate, 4-hydroxybutyl (meth)acrylate, and ε-caprolactone-modified (meth)acrylic monomers. Examples of the above-mentioned ε-caprolactone-modified (meth)acrylic monomers include PLACCEL FA-1, PLACCEL FA-2, PLACCEL FA-3, PLACCEL FA-4, PLACCEL FA-5, PLACCEL FM-1, PLACCEL FM-2, PLACCEL FM-3, PLACCEL FM-4, and PLACCEL FM-5 manufactured by Daicel Chemical Industries, Ltd. In the present description, (meth)acrylic acid means acrylic acid and methacrylic acid.

Examples of the carboxy group-containing ethylenically unsaturated monomer include carboxylic acid monomers such as (meth)acrylic acid, 2-ethylpropenic acid, crotonic acid, maleic acid, fumaric acid, and itaconic acid, or dicarboxylic acid monoester monomers thereof. Acrylic acid, methacrylic acid and the like are preferable as the carboxy group-containing ethylenically unsaturated monomer. These may be used singly or two or more of them may be used in combination.

Examples of other ethylenically unsaturated monomers include styrenes such as styrene and α-methylstyrene; (meth)acrylates such as methyl (meth)acrylate, ethyl (meth)acrylate, propyl (meth)acrylate, n-, i- and t-butyl (meth)acrylates, 2-ethylhexyl (meth)acrylate, and lauryl (meth)acrylate; and amides such as (meth)acrylamide.

The acrylic resin dispersion (A1) can be prepared by performing a polymerization reaction of the monomer mixture in the absence of a solvent or in the presence of a suitable organic solvent, dropping and mixing the resultant mixture in water, and removing excess solvent as necessary.

A polymerization initiator may be used in the polymerization reaction. As the polymerization initiator, for example, those used in the technical field as a radical polymerization initiator can be used. Specific examples of the polymerization initiator include organic peroxides such as benzoyl peroxide, t-butyl peroxide and cumene hydroperoxide, and organic azo compounds such as azobiscyanovaleric acid and azoisobutyronitrile.

The polymerization reaction can be carried out at a temperature of 80 to 140°C, for example. The polymerization reaction time may be appropriately chosen according to the polymerization temperature and the reaction scale, and the polymerization reaction can be carried out for 1 to 8 hours, for example. The polymerization reaction can be performed by an operation commonly performed by those skilled in the art. For example, polymerization can be performed by adding a monomer mixture containing an ethylenically unsaturated monomer and a polymerization initiator dropwise to a heated organic solvent. The organic solvent that can be used for the polymerization is not particularly limited, and one having a boiling point of about 60 to 250°C is preferable. Examples of organic solvents that can be suitably used include water-insoluble organic solvents such as butyl acetate, xylene, toluene, methyl isobutyl ketone, propylene glycol, dipropylene glycol dimethyl ether, methyl ether acetate; and water-soluble organic solvents such as tetrahydrofuran, ethanol, methanol, propanol, isopropanol, 2-butanol, t-butyl alcohol, dioxane, methyl ethyl ketone, ethylene glycol, ethylene glycol monobutyl ether, 2-methoxypropanol, 2-butoxypropanol, diethylene glycol monobutyl ether, butyl diglycol, N-methylpyrrolidone, ethylene carbonate, and propylene carbonate.

At least a part of the acid groups contained in the acrylic resin obtained by the polymerization may be neutralized by adding a neutralizer to the acrylic resin. This step can satisfactorily impart dispersibility in water to the acrylic resin. The neutralizer is not particularly limited as long as it is commonly used to neutralize acid groups contained in a water-dispersible resin composition at the time of the preparation. Examples thereof include organic amines such as monomethylamine, dimethylamine, trimethylamine, triethylamine, diisopropylamine, monoethanolamine, diethanolamine, and dimethylethanolamine, and inorganic bases such as sodium hydroxide, potassium hydroxide, and lithium hydroxide. These neutralizers may be used singly or two or more of them may be used in combination.

The acrylic resin dispersion (A1) can be prepared by mixing water with the optionally neutralized acrylic resin or mixing the acrylic resin with water. In the preparation of the acrylic resin dispersion (A1), excess organic solvent may be removed as necessary before the addition of the neutralizer or after the dispersion in water.

The acrylic resin dispersion (A1) preferably has a hydroxy value in the range of 5 to 200 mg KOH/g. The acrylic resin dispersion (A1) preferably has an acid value in the range of 5 to 100 mg KOH/g. When the hydroxy value and acid value of the acrylic resin dispersion (A1) are within the above ranges, the physical strength of a resultant coating film can be secured in a good range. In the present description, the acid value and the hydroxy value are both in terms of solid content, and are measured by the methods in accordance with JIS K 0070.

The acrylic resin dispersion (A1) preferably has a number-average molecular weight in the range of 1,000 to 100,000. When the number-average molecular weight of the acrylic resin dispersion (A1) is in the above range, the reactivity with the water-dispersible polyisocyanate (B) and the physical strength of a resultant coating film can be secured. In the present description, the number-average molecular weight is a value obtained by converting a result of a measurement by gel permeation chromatography (GPC), using polystyrene standards.

The acrylic resin dispersion (A1) preferably has an average particle diameter in the range of 50 to 200 nm, and more preferably in the range of 80 to 150 nm. When the average particle diameter of the acrylic resin dispersion (A1) is in the above range, good coating workability of a resultant coating composition can be secured, and the transparency and water resistance of a resultant coating film can be secured. The average particle diameter is determined by a dynamic light scattering method, and specifically, it can be measured using an electrophoretic light scattering photometer ELSZ Series (manufactured by Otsuka Electronics Co., Ltd.) or the like.

A commercially available product may be used as the acrylic resin dispersion (A1). Such a commercially available product is not particularly limited, and examples thereof include the MACRYNAL series such as MACRYNAL VSM6299/42WA (manufactured by Surface Specialties), the BAYHYDROL series such as BAYHYDROL A2470 (manufactured by Sumika Covestro Urethane Co., Ltd.), the BURNOCK series such as BURNOCK WD-551 (manufactured by DIC Corporation), and the NeoCryl series such as NeoCryl XK-555 (manufactured by DSM).

### Acrylic resin emulsion (A2)

The aqueous hydroxy group-containing resin dispersion (A) comprises an acrylic resin emulsion (A2) in addition to the acrylic resin dispersion (A1). The acrylic resin emulsion (A2) is a coating film-forming resin contained in the aqueous base component (I), and is an emulsion of an acrylic resin with hydroxy groups. The acrylic resin emulsion (A2) is an emulsion of an acrylic resin having a hydrophobic linear alkyl, branched alkyl, or alicyclic alkyl group with 4 to 6 carbon atoms (these may be collectively referred to as "hydrophobic alkyl group with 4 to 6 carbon atoms"). When the aqueous hydroxy group-containing resin dispersion (A) contains the acrylic resin emulsion (A2) in addition to the acrylic resin dispersion (A1), the sagging generation after application can be effectively prevented and the appearance of a resultant coating film can be maintained at a high level.

The acrylic resin emulsion (A2) is preferably an emulsion polymer of a monomer mixture comprising a (meth)acrylate monomer having a hydrophobic linear alkyl, branched alkyl, or alicyclic alkyl group with 4 to 6 carbon atoms (this may hereinafter be referred to as "(meth)acrylate monomer containing a hydrophobic alkyl group with 4 to 6 carbon atoms").

Examples of the (meth)acrylate monomer containing a hydrophobic alkyl group with 4 to 6 carbon atoms include n-butyl (meth)acrylate, isobutyl (meth)acrylate, t-butyl (meth)acrylate, n-pentyl (meth)acrylate, neopentyl (meth)acrylate, isopentyl (meth)acrylate, sec-pentyl (meth)acrylate, 3-pentyl (meth)acrylate, cyclopentyl (meth)acrylate, n-hexyl (meth)acrylate, and cyclohexyl (meth)acrylate. These (meth)acrylate monomer containing a hydrophobic alkyl group with 4 to 6 carbon atoms may be used singly or in combination.

The content of the (meth)acrylate monomer containing a hydrophobic alkyl group with 4 to 6 carbon atoms is preferably in the range of 10 to 80 parts by mass, more preferably in the range of 15 to 80 parts by mass, and even more preferably in the range of 15 to 75 parts by mass, per 100 parts by mass of the monomer mixture to be used for the acrylic resin emulsion synthesis. When the content of the (meth)acrylate monomer containing a hydrophobic alkyl group with 4 to 6 carbon atoms is in the above range, the coating workability of a coating composition obtained using the produced acrylic resin emulsion and the appearance and the water resistance of a coating film obtained from the coating composition are improved. The (meth)acrylate monomer containing a hydrophobic alkyl group with 4 to 6 carbon atoms may be used singly or in combination.

The monomer mixture comprises a monomer other than the (meth)acrylate monomer containing a hydrophobic alkyl group with 4 to 6 carbon atoms. Examples of such a monomer include a hydroxy group-containing ethylenically unsaturated monomer, an acid group-containing ethylenically unsaturated monomer, and a styrenic monomer. The monomer mixture preferably comprises at least a (meth)acrylate monomer containing a hydrophobic alkyl group with 4 to 6 carbon atoms and a hydroxy group-containing ethylenically unsaturated monomer.

Examples of the hydroxy group-containing ethylenically unsaturated monomer include 2-hydroxyethyl (meth)acrylate, 2-hydroxypropyl (meth)acrylate, 4-hydroxybutyl (meth)acrylate, and ε-caprolactone-modified (meth)acrylic monomers. Examples of the above-mentioned ε-caprolactone-modified (meth)acrylic monomers include PLACCEL FA-1, PLACCEL FA-2, PLACCEL FA-3, PLACCEL FA-4, PLACCEL FA-5, PLACCEL FM-1, PLACCEL FM-2, PLACCEL FM-3, PLACCEL FM-4, and PLACCEL FM-5 manufactured by Daicel Chemical Industries, Ltd.

When the monomer mixture comprises a hydroxy group-containing ethylenically unsaturated monomer, the hydrophilicity based on hydroxy groups is imparted to the acrylic resin emulsion, the workability and the stability against freezing are enhanced, and the curing reactivity with a curing agent can be imparted when the acrylic resin emulsion is used for a coating composition.

The content of the hydroxy group-containing ethylenically unsaturated monomer is preferably in an amount such that the hydroxy value of a resultant acrylic resin emulsion is 5 to 100 mg KOH/g, and more preferably 8 to 60 mg KOH/g. When the hydroxy value of the acrylic resin emulsion is in the above range, there are effects such as improving the water resistance of a resultant coating film. The hydroxy group-containing ethylenically unsaturated monomer may be used singly or two or more species thereof may be used in combination.

The monomer mixture may comprise an acid group-containing ethylenically unsaturated monomer as necessary. Examples of the acid group of the acid group-containing ethylenically unsaturated monomer include a carboxy group, a sulfonic acid group, and a phosphoric acid group. As the acid group-containing ethylenically unsaturated monomer, for example, a carboxy group-containing ethylenically unsaturated monomer can be suitably used. Examples of the carboxy group-containing ethylenically unsaturated monomer include (meth)acrylic acid, crotonic acid, isocrotonic acid, ethacrylic acid, propylacrylic acid, isopropylacrylic acid, itaconic acid, maleic anhydride, and fumaric acid. Examples of a sulfonic acid group-containing ethylenically unsaturated monomer, which is one of the acid group-containing ethylenically unsaturated monomers, include p-vinylbenzenesulfonic acid, p-acrylamidopropanesulfonic acid, and t-butylacrylamidosulfonic acid. Examples of a phosphoric acid group-containing ethylenically unsaturated monomer, which is one of the acid group-containing ethylenically unsaturated monomers, include LIGHT ESTER PM (manufactured by Kyoeisha Chemical Co., Ltd.) such as a phosphoric acid monoester of 2-hydroxyethyl acrylate and a phosphoric acid monoester of 2-hydroxypropyl methacrylate.

When the monomer mixture comprises an acid group-containing ethylenically unsaturated monomer, the curing reaction with a curing agent at the time of forming a coating film can be promoted.

When the monomer mixture comprises an acid group-containing ethylenically unsaturated monomer, the content of the acid group-containing ethylenically unsaturated monomer is preferably in an amount such that the acid value of a resultant acrylic resin emulsion is 0.5 to 35 mg KOH/g, and more preferably 1 to 30 mg KOH/g. When the acid value of the acrylic resin emulsion is in the above range, there are effects such that the mechanical stability of the coating composition is improved and that the water resistance of a resultant coating film is improved. The acid group-containing ethylenically unsaturated monomer may be used singly or two or more thereof may be used in combination.

The monomer mixture may comprise a styrenic monomer, if necessary. Examples of the styrenic monomer include styrene, α-methylstyrene, α-methylstyrene dimer, vinyltoluene, and divinylbenzene. Of these, styrene is particularly preferable from the viewpoints of hydrophobicity, cost, and convenience in availability.

When the monomer mixture comprises a styrenic monomer, the content of the styrenic monomer is preferably 1 to 10% by mass, and more preferably 2 to 8% by mass, based on the total amount of the monomer mixture to be used for the acrylic resin emulsion synthesis. When the content of the styrenic monomer in the monomer mixture is in the above range, there are effects such that the gloss and the water resistance of a resultant coating film are improved.

The monomer mixture may comprise a crosslinkable monomer such as (meth)acrylonitrile, (meth)acrylamide, carbonyl group-containing ethylenically unsaturated monomers, hydrolytically polymerizable silyl group-containing monomers, and polyfunctional vinyl monomers, as a monomer other than the above-described monomers.

As long as the monomer mixture comprises a (meth)acrylate monomer containing a hydrophobic alkyl group with 4 to 6 carbon atoms, it may further comprise an alkyl (meth)acrylate monomer other than the hydrophobic alkyl group-containing (meth)acrylate monomer with 4 to 6 carbon atoms as necessary. Examples of such monomers include methyl (meth)acrylate, ethyl (meth)acrylate, propyl (meth)acrylate, 2-ethylhexyl (meth)acrylate, octyl (meth)acrylate, nonyl (meth)acrylate, decyl (meth)acrylate, dodecyl (meth)acrylate, and stearyl (meth)acrylate.

Emulsion polymerization may be performed by heating the monomer mixture in an aqueous liquid with stirring in the presence of a radical polymerization initiator and an emulsifier. The reaction temperature is preferably about 30 to about 100°C, for example, and the reaction time is preferably about 1 to about 10 hours, for example. The reaction temperature can be adjusted, for example, by collectively adding or gradually dropping the monomer mixture or monomer pre-emulsion to a reaction vessel charged with water and an emulsifier.

As the radical polymerization initiator, known initiators usually used in emulsion polymerization of acrylic resins can be used. Specifically, for example, persulfates such as potassium persulfate, sodium persulfate, and ammonium persulfate as a water-soluble free radical polymerization initiator can be used in the form of an aqueous solution. In addition, a so-called redox initiator containing a combination of an oxidizing agent such as potassium persulfate, sodium persulfate, ammonium persulfate and hydrogen peroxide and a reducing agent such as sodium bisulfite, sodium thiosulfate, Rongalite and ascorbic acid can be used in the form of an aqueous solution.

As the emulsifier, an anionic or nonionic emulsifier selected from among micelle compounds can be used that has a hydrocarbon group with 6 or more carbon atoms and a hydrophilic moiety such as a carboxylate, a sulfonate or a sulfate partial ester in one molecule. Among these, examples of the anionic emulsifier include an alkali metal salt or an ammonium salt of a sulfuric acid half ester with an alkyl phenol or a fatty alcohol; an alkali metal salt or an ammonium salt of an alkyl sulfonate or an allyl sulfonate; an alkali metal salt or an ammonium salt of a sulfuric acid half ester with a polyoxyethylene alkylphenyl ether, a polyoxyethylene alkyl ether or a polyoxyethylene allyl ether. Examples of the nonionic emulsifier include a polyoxyethylene alkylphenyl ether, a polyoxyethylene alkyl ether, or a polyoxyethylene allyl ether. Besides such general anionic and nonionic emulsifiers, various anionic or nonionic, reactive emulsifiers can be used that have a radically polymerizable unsaturated double bond-containing group, such as an acrylic group, a methacrylic group, a propenyl group, an allyl group, an allyl ether group, a maleic group. These can be used singly or in combination of two or more species thereof.

Moreover, in emulsion polymerization, the combined use of an auxiliary agent for molecular weight adjustment (a chain transfer agent) such as mercaptan compounds and lower alcohols is preferable in many cases from the viewpoint of promoting emulsion polymerization or promoting smooth and uniform formation of a coating film to improve the adhesion to a substrate, and it is appropriately carried out according to the situation.

As an emulsion polymerization method, any emulsion polymerization method can be used, such as a conventional single-stage continuous uniform dropwise monomer addition method; a core-shell polymerization method that is a multi-stage monomer feeding method; and a power feed polymerization method wherein the monomer composition to be fed is continuously varied during polymerization.

The number-average molecular weight of the acrylic resin is not particularly limited, and is preferably 50,000 to 10,000,000, and more preferably 100,000 to 2,000,000.

The acrylic resin emulsion (A2) preferably has an average particle diameter in the range of 80 to 300 nm, and more preferably in the range of 90 to 200 nm. When the average particle diameter of the acrylic resin emulsion (A2) is in the above range, excellent coating workability of a resultant coating composition can be secured, and excellent transparency, water resistance, and the like of a resultant coating film can be secured.

In order to maintain the stability of the obtained acrylic resin emulsion by neutralizing a part or the whole of the acid groups, a basic compound may be added to the acrylic resin emulsion. As the basic compound, for example, ammonia, amines, and alkali metals can be used.

The resin solid mass ratio of the acrylic resin dispersion (A1) to the acrylic resin emulsion (A2) in the aqueous hydroxy group-containing resin dispersion (A) contained in the aqueous base component (I) is preferably in the range of (A1) : (A2) = 95 : 5 to 50 : 50, more preferably in the range of (A1) : (A2) = 90 : 10 to 55 : 45, and even more preferably in the range of (A1) : (A2) = 90 : 10 to 60 : 40. When the resin solid mass ratio (A1) : (A2) is in the above range, the appearance of a resultant coating film can be improved while ensuring excellent coating workability.

### Water-dispersible polyisocyanate (B)

The aqueous coating composition comprises an aqueous base component (I) and a water-dispersible curing agent (II). The water-dispersible curing agent (II) comprises a water-dispersible polyisocyanate (B). The water-dispersible polyisocyanate (B) refers to a polyisocyanate compound with a water dispersibility and it can be dispersed without separation when added to an aqueous medium. The water-dispersible polyisocyanate (B) may be modified with a hydrophilic compound having a hydrophilic group as necessary. The hydrophilic group may be either an ionic hydrophilic group or a nonionic hydrophilic group.

The polyisocyanate compound contained in the water-dispersible polyisocyanate is not particularly limited as long as it does not deviate from the scope of the present invention. Examples thereof include aromatic diisocyanates such as tolylene diisocyanate (TDI), 4,4'-diphenylmethane diisocyanate (MDI), xylylene diisocyanate (XDI), and metaxylylene diisocyanate (MXDI); aliphatic diisocyanates such as hexamethylene diisocyanate (HDI), alicyclic polyisocyanates such as isophorone diisocyanate (IPDI); and their multimers such as biuret type, isocyanurate type, and trimethylolpropane (TMP) adduct type. A mixture of two or more of such polyisocyanates is also available.

Preferably, the polyisocyanate is an aliphatic diisocyanate and/or an alicyclic polyisocyanate, and more preferably hexamethylene diisocyanate (HDI) and/or isophorone diisocyanate (IPDI). Such a polyisocyanate compound has lower reactivity than aromatic isocyanate compounds and can suppress a side reaction with an aqueous medium such as water.

The polyisocyanate chain may be modified as desired without departing from the scope of the present invention, and a cross-linking reaction may occur due to isocyanate groups contained in the polyisocyanate. Since a polyisocyanate compound as a multimer is trifunctional or more, at least one of the multiple isocyanate groups may be modified, or at least two isocyanate groups may cause a cross-linking reaction.

The content of the water-dispersible polyisocyanate (B) in the aqueous coating composition is preferably a quantity that provides an equivalent ratio (NCO/OH) of the isocyanate groups of the water-dispersible polyisocyanate (B) to the hydroxy groups of the aqueous hydroxy group-containing resin dispersion (A) in the range of 0.5 to 3.0, and more preferably in the range of 1.0 to 2.0. When that content affords an equivalent ratio (NCO/OH) in the above range, the curing reactivity of the aqueous coating composition can be ensured in a good range. The above equivalent ratios are all converted in terms of solid content.

### Other components

In addition to the above components, other components may further be contained in the aqueous coating composition as necessary, depending on the purpose and application. Examples of such other components include pigments, resin particles, resin emulsions other than the above, resin components, dispersants, curing catalysts, viscosity modifiers, film-forming aids, and additives commonly used in coating compositions (for example, UV absorbers, light stabilizers, antioxidants, defoaming agents, surface conditioning agents, pinhole inhibitors, and rust inhibitors). These components may be added to the base component and/or the curing agent in a manner that does not impair the physical characteristics of the coating composition of the present disclosure.

The aqueous coating composition may comprise an organic solvent as necessary. Examples of the organic solvent include butyl acetate, xylene, toluene, methyl isobutyl ketone, propylene glycol, dipropylene glycol dimethyl ether, methyl ether acetate, tetrahydrofuran, ethanol, methanol, propanol, isopropanol, 2-butanol, t-butyl alcohol, dioxane, methyl ethyl ketone, ethylene glycol, ethylene glycol monobutyl ether, ethylene glycol monobutyl ether acetate (butyl cellosolve acetate), propylene glycol monomethyl ether acetate, 2-methoxypropanol, 2-butoxypropanol, diethylene glycol monobutyl ether, butyl diglycol, N-methylpyrrolidone, ethylene carbonate, and propylene carbonate. These organic solvents may be the organic solvents used in the preparation of the aqueous hydroxy group-containing resin dispersion (A), the water-dispersible polyisocyanate (B), or the like, and may be those separately added in the preparation of the aqueous coating composition.

The aqueous coating composition preferably comprises a viscosity modifier (C) in addition to the components (A) and (B). The viscosity modifier (C) may be contained in either or both of the aqueous base component (I) and the water-dispersible curing agent (II).

Examples of the viscosity modifier (C) include urethane type viscosity modifiers (for example, the ADEKA NOL UH series manufactured by ADEKA Corporation and the NOPAL L series manufactured by SAN NOPCO Ltd.), polyamide type viscosity modifiers (for example, the DISPARLON series manufactured by Kusumoto Chemicals, Ltd.), wax type viscosity modifiers (for example, the AQUATIX series manufactured by BYK), urea type viscosity modifiers (for example, BYK-410, 415, 420, 425. manufactured by BYK).

It is more preferable to use a urethane type viscosity modifier, a wax type viscosity modifier, or the like as the viscosity modifier (C).

Further use of the viscosity modifier (C) in the above-described aqueous coating composition has an advantage that the sagging generation after the application of the coating composition can be effectively prevented.

When the viscosity modifier (C) is used, it is more preferably contained in the aqueous base component (I). The content of the viscosity modifier (C) is preferably in the range of 0.5 to 5 parts by mass, and more preferably in the range of 0.7 to 3 parts by mass, per 100 parts by mass of the resin solid content of the aqueous hydroxy group-containing resin dispersion (A).

The aqueous base component (I) and the water-dispersible curing agent (II) contain a water component such as ion-exchanged water and distilled water.

### Methods for preparing aqueous coating composition and for forming coating film

The aqueous coating composition can be prepared by mixing the above-described components by a method known to those skilled in the art. As a method for preparing the coating composition, methods usually used by those skilled in the art can be used. For example, methods commonly used by those skilled in the art may be adopted, such as a kneading and mixing means using a kneader or a roll, or a dispersing and mixing means using a sand grinding mill or a disperser.

Regarding the mixing timing of the aqueous base component (I) and the water-dispersible curing agent (II) in the above-described aqueous coating composition, the aqueous base component (I) and the water-dispersible curing agent (II) may be mixed before use and then applied by an ordinary application method. Alternatively, the application may be carried out by a method where the respective liquids are sent to a gun with a two-liquid mixing gun and then mixed at a gun tip.

A coating film can be formed on an article by applying the aqueous coating composition to the article and curing it. Examples of the article to be coated include metal substrates, plastic substrates, composite substrates thereof, wood, glass, cloth, concrete, and ceramic materials. Examples of the metal substrate include metals such as iron, steel, copper, aluminum, tin, and zinc, and alloys containing such metals. The metal substrate may be plated with zinc, copper, chromium or the like, or may be surface-treated with a surface treatment agent such as chromic acid, zinc phosphate or a zirconium salt. Examples of the plastic substrate include polypropylene resin, polycarbonate resin, urethane resin, polyester resin, polystyrene resin, ABS resin, vinyl chloride resin, and polyamide resin. These plastic substrates may be provided with primer coating.

The article to be coated may be a molded article comprising the above-described substrate. Examples of the molded article include various molded articles such as automobile bodies, various vehicle bodies, and parts for home electric appliances. The aqueous coating composition can be particularly suitably used when, for example, the article to be coated is a metal substrate or the like which has a large heat capacity or a large size and to which heat does not sufficiently transfer in a heating furnace. Specific examples of such an article include construction machines (for example, bulldozers, scrapers, hydraulic shovels, digging machines, transport machines (trucks and trailers, or the like), cranes/cargo handling machines, foundation work machines (diesel hammers and hydraulic hammers, or the like), tunnel construction machines (boring machines, or the like), and road rollers); industrial machines such as light and heavy electrical equipment for general industries, agricultural machines, steel furniture, machine tools and large vehicles; and articles that have a large heat capacity or a large size and do not easily have an elevated temperature when heated (for example, railroad vehicles, hulls, buildings, and constructed structures).

Articles as mentioned above, such as industrial machines, construction machines, railroad vehicles, hulls, buildings or constructed structures, are generally large and characterized by their large heat capacity due to the thickness of their constituent substrates (steel plates) compared with automobile bodies and the like which affords withstandability to a strong load. Owing to this, such articles to be coated have a problem that heat does not sufficiently transfer to the articles in a heating furnace. One of the features of the present aqueous coating composition is that it can be cured at low temperatures. The aqueous coating composition has an advantage that it can be suitably used for coating articles which are large in heat capacity or large in size and are difficult to undergo a high temperature heat-cure treatment after being applied.

The method for applying the aqueous coating composition is not particularly limited, and examples thereof include coating methods commonly used such as immersion, brush, roller, roll coater, air spray, airless spray, curtain flow coater, roller curtain coater, and die coater. In the spray coating, a two-component mixing gun may be used as necessary. These can be appropriately selected according to the article to be coated.

The aqueous coating composition is applied such that the dry film thickness after forming a coating film is 20 to 150 µm, and preferably 30 to 100 µm. The curing temperature of the aqueous coating composition is preferably in the range of 20°C to 150°C, and more preferably in the range of 20°C to 100°C. The curing time may be appropriately chosen according to the curing temperature, and may be, for example, between 10 minutes and 7 days.

The aqueous coating composition is a two-component aqueous coating composition composed of an aqueous base component (I) and a water-dispersible curing agent (II). In addition, the aqueous coating composition is characterized in that the aqueous hydroxy group-containing resin dispersion (A) contained in the aqueous base component (I) comprises an acrylic resin dispersion (A1) and a specific acrylic resin emulsion (A2).

As a means for suppressing the sagging generation of an aqueous coating composition during a coating operation that is a flowing down of the coating composition on an article to be coated, for example, a means of increasing the coating film viscosity has been studied. However, when simply the coating film viscosity is increased in order to prevent the sagging generation, the appearance of the resultant coating film tends to deteriorate.

In order to solve such technical problems, the above-mentioned aqueous coating composition comprises the acrylic resin dispersion (A1) and the emulsion of the acrylic resin(A2) having a hydrophobic alkyl group with 4 to 6 carbon atoms as the aqueous hydroxy group-containing resin dispersion (A) contained in the aqueous base component (I). It has been experimentally revealed that due to the aqueous hydroxy group-containing resin dispersion (A) essentially comprising the above two components and the emulsion of the acrylic resin (A2) having a hydrophobic alkyl group with 4 to 6 carbon atoms, the sagging generation after application can be effectively prevented and the appearance of a resultant coating film (performance to prevent the bubbles generation, gloss value, dust compatibility, transparency, and the like) can be maintained at a high level. The aqueous coating composition is superior in coating workability because its sagging is suppressed after the application, and has an advantage that the appearance of a resultant coating film is excellent. Further, the aqueous coating composition has an advantage that both coating workability and finished appearance of a coating film can be achieved at a high level in a wide range of coating environments such as a high temperature and high humidity coating environment and a low temperature coating environment.

### EXAMPLES

The present invention will be described more specifically with reference to the following examples, and the present invention is not limited to the examples. In the examples, "parts" and "%" are on a mass basis unless otherwise indicated.

### Production Example 1: Preparation of acrylic resin emulsion (A2-1)

A reaction vessel was charged with 121 parts by mass of deionized water and 0.7 parts by mass of a non-reactive emulsifier (Newcol 707-SF; manufactured by Nippon Nyukazai Co., Ltd.), and the content temperature was set to 85°C. After reaching a prescribed temperature, an initiator solution consisting of 0.3 parts by mass of ammonium persulfate and 5 parts by mass of deionized water was added as a polymerization initiator to the reaction solution. After stirring for 5 minutes, a pre-emulsified liquid and an initiator solution were added dropwise in parallel over 120 minutes, where the pre-emulsified liquid was prepared by emulsifying a monomer solution consisting of 25 parts by mass of butyl acrylate, 10 parts by mass of butyl methacrylate, 20 parts by mass of isobutyl methacrylate, 20 parts by mass of t-butyl methacrylate, 11 parts by mass of ethyl acrylate, 12 parts by mass of 2-hydroxyethyl acrylate, and 2 parts by mass of ethylene glycol dimethacrylate using an emulsifier solution consisting of 3 parts by mass of a non-reactive emulsifier (Newcol 707-SF; manufactured by Nippon Nyukazai Co., Ltd.) and 49 parts by mass of deionized water, and the initiator solution consisted of 0.2 parts by mass of ammonium persulfate as a polymerization initiator and 60 parts by mass of deionized water. After stirring for 2 hours, the reaction temperature was cooled to 40°C, and the reaction mixture was neutralized with 0.3 parts by mass of a 25% aqueous ammonia solution and filtered, affording an acrylic resin emulsion (A2-1) (solid concentration: 30% by mass, hydroxy value: 55 mg KOH/g, number-average molecular weight: 1,000,000 or more, average particle diameter: 120 nm) .

### Production Examples 2 to 5: Preparation of acrylic resin emulsions (A2-2) to (A2-8)

Acrylic resin emulsions (A2-2) to (A2-8) were prepared by the same procedure as in Production Example 1 except that the type and amount of the monomers contained in the monomer mixture were changed as shown in the table below.

**[Table 1]**

| | Acrylic resin emulsion (A2) | Productio n Example 1 | Productio n Example 2 | Productio n Example 3 | Productio n Example 4 | Productio n Example 5 | Productio n Example 6 | Productio n Example 7 | Productio n Example 8 |
|---|---|---|---|---|---|---|---|---|---|
| | | (A2-1) | (A2-2) | (A2-3) | (A2-4) | (A2-5) | (A2-6) | (A2-7) | (A2-8) |
| Species and amount of monomer s in monomer mixture | Butyl acrylate | 25 | 10 | 5 | 5 | 33 | | | |
| | Butyl methacrylate | 10 | | | | 12 | 5 | | |
| | Isobutyl methacrylate | 20 | | | | 20 | | | |
| | Cyclohexyl methacrylate | | 40 | 20 | 20 | | | | |
| | t-Butyl methacrylate | 20 | | | | 20 | | | |
| | Methyl methacrylate | 11 | | 28.5 | 15.8 | | 30.0 | 3. 6 | |
| | Ethyl acrylate | | 34 | 17.5 | 10 | | 45.5 | 27.1 | |
| | Ethyl methacrylate | | | 17 | 17 | | | 50 | |
| | Styrene | | 8 | 5 | 10 | | 10 | 10 | 18 |
| | 2-Ethylhexyl acrylate | | | | | | | | 13.9 |
| | 2-Ethylhexyl methacrylate | | | | | | | | 60 |
| | 2-Hydroxyethyl acrylate | 12 | 2 | | 18.6 | 12 | | | |
| | 2-Hydroxyethyl methacrylate | | | 4.5 | | | 7.0 | 5.8 | 3.0 |
| | Methacrylic acid | | 4 | 0.5 | 1.6 | 1 | 0.5 | 1.5 | 3.1 |
| | Ethylene glycol dimethacrylate | 2 | 2 | 2 | 2 | 2 | 2 | 2 | 2 |
| Total | | 100 | 100 | 100 | 100 | 100 | 100 | 100 | 100 |
| Content (% by mass) of (meth)acrylate monomer containing a hydrophobic alkyl group with 4 to 6 carbon atoms | | 75 | 50 | 25 | 25 | 85 | 5 | 0 | 0 |
| Acid value (mg KOH/g) | | 0 | 26.1 | 3.3 | 10 | 6. 5 | 3.3 | 10 | 20 |
| Hydroxy value (mg KOH/g) | | 58 | 9.7 | 19.4 | 80 | 58 | 30 | 25 | 13 |
| Number-average molecular weight | | 1,000,000 or more | 1,000,000 or more | 1,000,000 or more | 1,000,000 or more | 1,000,000 or more | 1,000,000 or more | 1,000,000 or more | 1,000,000 or more |

### Example 1

### Preparation of aqueous coating composition

### Aqueous base component (I-1)

An aqueous base component 1 was prepared by mixing and stirring 18 parts by mass of the acrylic resin emulsion (A2-1) synthesized in Production Example 1, 52 parts by mass of BURNOCK WD-551 as an acrylic resin dispersion (A1-1), and 0.7 parts by mass of NOPAL L3303 as a viscosity modifier, with a disperser.

### Water-dispersible curing agent (II-1)

A water-dispersible curing agent (II) was prepared by mixing and stirring 30 parts by mass of Bayhydur XP2655 as a water-dispersible polyisocyanate (B) and 21 parts by mass of butyl cellosolve acetate (organic solvent), with a disperser.

### Coating film formation

After solvent degreasing a JIS G 3141 (SPCC-SD) cold-rolled steel sheet having a thickness of 0.8 mm and a size of 70x150 mm, a coating composition comprising Uniepoch 30 Primer NC (manufactured by Nippon Paint Industrial Coatings Co., Ltd.) as a base component and Uniepoch 30 primer curing agent (manufactured by Nippon Paint Industrial Coatings Co., Ltd.) as a curing agent was mixed as a solvent-type primer coating material by using a disperser, and then applied with a spray gun such that a dry film thickness would be 30 to 50 µm, followed by drying at 23°C for 1 day.

Next, a coating composition as a surfacer (intermediate coating material) comprising naxBES Non-Sanding Primer-Surfacer HS (manufactured by Nippon Paint Industrial Coatings Co., Ltd.) as a base component and naxBES Non-Sanding Primer-Surfacer Hardener HS (manufactured by Nippon Paint Industrial Coatings Co., Ltd.) as a curing agent was mixed with a disperser and then applied with a spray gun to the surface of the primer coating film formed on that cold-rolled steel sheet such that a dry film thickness would be 40 to 50 µm, followed by drying at 23°C for 1 day.

Next, the aqueous base component (I) and the water-dispersible curing agent (II) prepared above were mixed with a disperser in the formulation shown in the following Table 1, and the resultant mixture was applied to the surface of the surfacer coating film with a spray gun such that a dry film thickness would be 30 to 50 µm, followed by drying at 60°C for 1 hour. The coating conditions were a temperature of 25°C and a humidity of 50% RH.

### Examples 2 and 3

Aqueous base components (I) and water-dispersible curing agents (II) were prepared in the same manners as in Example 1, and then aqueous coating compositions were prepared.

Coating films were formed by the same procedure as in Example 1 except that coating was performed under the coating conditions (temperature and humidity) shown in the following table using the obtained aqueous coating compositions. The blending amounts shown in the following table are the amounts (parts by mass) of solids (active ingredients).

### Examples 4 to 14 and Comparative Examples 1 to 4

Aqueous coating compositions were prepared in the same manner as in Example 1 except that the types and the amounts of the acrylic resin dispersion (A1), the acrylic resin emulsion (A2), the water-dispersible polyisocyanate (B), the viscosity modifier (C) and the organic solvent were changed to those shown in the following table in the preparation of aqueous base components (I) and water-dispersible curing agents (II).

Using the obtained aqueous coating compositions, coating films were formed by the same procedure as in Example 1.

Physical properties of the coating films obtained in Examples and Comparative Examples were evaluated based on the following criteria. The results of the evaluations are shown in the following tables.

### Coating workability

Using the aqueous coating compositions prepared in Examples and Comparative Examples, the sagging generation limit film thickness and the bubbles generation limit film thickness were measured.

10-Hole perforated zinc phosphate-treated plates (100 mm × 300 mm) were used as an articles to be coated with the aqueous coating compositions. The aqueous coating compositions were applied by air spray coating under the following conditions.

### <Air spray coating conditions>

Discharge: Return 3 turns from fully closed
Air pressure: 0.3 MPa
Distance from the article to the gun: 30 cm

### <Coating method>

An article held substantially vertically was subjected to coating according to the following procedure, and the sagging limit film thickness and the bubbles limit film thickness were determined.

Step 1. Apply a thin film to the article.

Step 2. Dry at room temperature for 10 minutes.

Step 3. Apply a thin film from the hole on the left edge to the right edge.

Step 4. Dry at room temperature for 1 minute.

Step 5. Coating with a few centimeters shift from the left edge.

Step 6. Dry at room temperature for 1 minute.

Step 7. Coat with a few centimeters shift to the right from the coating start position in Step 5.

Step 8. Repeat Steps 6 and 7 to make a coated plate with a film thickness gradient from the left edge to the right edge.

Step 9. After drying at room temperature for 10 minutes, dry in a jet oven at 60°C for 30 minutes.

Step 10. Measure the film thickness on both sides of the hole where the coating material sagged within 5 mm, calculate the average value, and take the obtained value as a sagging limit film thickness.

Step 11. Measure the film thickness in front of the bubbles in the article, calculate its average value, and take the obtained value as a bubbles limit film thickness.

The evaluation criteria for the sagging limit film thickness are as follows.
⊙: No sagging generated even when the film thickness was 70 µm or more.
O: Sagging generated when the film thickness was 60 µm or more and less than 70 µm.
Δ: Sagging generated when the film thickness was 45 µm or more and less than 60 µm.
×: Sagging generated when the film thickness was less than 45 µm.

The evaluation criteria for bubbles limit film thickness are as follows.
⊙: No bubbles generated even when the film thickness was 80 µm or more.
O: Bubbles generated when the film thickness was 70 µm or more and less than 80 µm.
Δ: Bubbles generated when the film thickness was 60 µm or more and less than 70 µm.
X: Bubbles generated when the film thickness was less than 60 µm.

### 20° Gloss value

The gloss values (20° gloss value) of the coating films obtained in the examples and the comparative examples were measured with a gloss meter GM-268A (manufactured by KONICA MINOLTA, INC.) and was evaluated based on the following criteria.
⊙: more than 85
O: more than 80 and 84 or less
Δ: more than 75 and 80 or less
×: 75 or less.

### Evaluation of transparency of coating film

The transparency of the coating films obtained in the examples and the comparative examples was visually observed and evaluated according to the following criteria.
⊙: No clouding is observed in the coating film.
O: Slight clouding is observed in the coating film.
Δ: Clouding is observed in a part of the coating film.
×: Clouding is observed on the entire surface of the coating film.

### Evaluation of water resistance

The test evaluation plates with the coating films formed in the examples and the comparative examples were immersed in a water bath maintained at 20°C for 168 hours. The appearance of the coating films after the immersion test was visually observed and evaluated according to the following criteria.
⊙: No abnormality (blister) generated on the coating film.
O: There was a blister with a diameter of less than 1 mm on a part of the coating film.
Δ: There was a blister with a diameter of 1 mm or more and less than 2 mm on a part of the coating film.
×: There was a blister with a diameter of 2 mm or more on a part of the coating film.

**[Table 2]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Base component | Acrylic resin dispersion (A1) | (A1-1) | 52 | 52 | 52 | 54 | 48 | 52 | 52 | 50 | |
| | | (A1-2) | | | | | | | | | 45 |
| | | (A1-3) | | | | | | | | | |
| | Acrylic resin emulsion (A2) | (A2-1) | 18 | 18 | 18 | 7 | 28 | 18 | 18 | | |
| | | (A2-2) | | | | | | | | 20 | |
| | | (A2-3) | | | | | | | | | 24 |
| | | (A2-4) | | | | | | | | | |
| | | (A2-5) | | | | | | | | | |
| | | (A2-6) | | | | | | | | | |
| | | (A2-7) | | | | | | | | | |
| | | (A2-8) | | | | | | | | | |
| | Viscosity modifier (C) | (C-1) | 0.7 | 0.7 | 0.7 | 0.6 | 0.8 | | 0.7 | | |
| | | (C-2) | | | | | | | | 0.7 | |
| | | (C-3) | | | | | | | | | 0.7 |
| | Organic solvent (butyl cellosolve acetate) | | 21 | 21 | 21 | 18 | 23 | 21 | | 21 | |
| | Organic solvent (propylene glycol monomethyl ether acetate) | | | | | | | | | | 21 |
| Curing agent | Water-dispersible polyisocyanate (B) | (B-1) | 30 | 30 | 30 | 39 | 24 | 30 | 30 | 30 | 31 |
| | | (B-2) | | | | | | | | | |
| Total solid mass of (A) and (B) | | | 100.0 | 100.0 | 100.0 | 100.0 | 100.0 | 100.0 | 100.0 | 100.0 | 100.0 |
| Mixing ratio of base component to curing agent (base component : curing agent) | | | 70 : 30 | 70 : 30 | 70 : 30 | 61 : 39 | 76 : 24 | 70 : 30 | 70 : 30 | 70 : 30 | 69 : 31 |
| Mass ratio of (A1) to (A2) (A1) : (A2) | | | 74 : 26 | 74 : 26 | 74 : 26 | 89 : 11 | 63 : 37 | 74 : 26 | 74 : 26 | 71 : 29 | 65 : 35 |
| Equivalent ratio of isocyanate groups of (B) to hydroxy groups of (A) (NCO/OH) | | | 1.4 | 1.4 | 1.4 | 1.9 | 1.1 | 1.6 | 1.6 | 1.4 | 1.4 |
| Coating conditions (temperature °C/humidity % RH) | | | 25°C/50% | 10°C/82% | 36°C/12% | 25°C/50% | | | | | |
| Coating workability | | Sagging limit film | ⊙ | ⊙ | ⊙ | ⊙ | ⊙ | Δ | ⊙ | ⊙ | ⊙ |
| | thickness | | | | | | | | | | |
| | Popping limit film thickness | ⊙ | ⊙ | ⊙ | ⊙ | ⊙ | O | ⊙ | ⊙ | ⊙ | |
| 20° Gloss value | | O | O | O | ⊙ | O | O | O | O | O | |
| Transparency of coating film | | ⊙ | ⊙ | O | ⊙ | O | ⊙ | ⊙ | ⊙ | O | |
| Water resistance | | ⊙ | ⊙ | ⊙ | o | o | ⊙ | ⊙ | ⊙ | O | |

**[Table 3]**

| | | | Example 10 | Example 11 | Example 12 | Example 13 | Example 14 | Comparative Example 1 | Comparative Example 2 | Comparative Example 3 | Comparative Example 4 |
|---|---|---|---|---|---|---|---|---|---|---|---|
| Base component | Acrylic resin dispersion (A1) | (A1-1) | | | 52 | 52 | 33 | 67 | | 52 | |
| | | (A1-2) | | 45 | | | | | | | |
| | | (A1-3) | 42 | | | | | | | | 49 |
| | Acrylic resin emulsion (A2) | (A2-1) | | | | | 41 | | 79 | | |
| | | (A2-2) | | | | | | | | | |
| | | (A2-3) | 24 | | | | | | | | |
| | | (A2-4) | | 24 | | | | | | | |
| | | (R2-5) | | | 18 | | | | | | |
| | | (A2-6) | | | | 18 | | | | | |
| | | (A2-7) | | | | | | | | 20 | |
| | | (A2-8) | | | | | | | | | 20 |
| | Viscosity modifier (C) | (C-1) | | 0.7 | 0.7 | 0.7 | 0.7 | 0.7 | 0.8 | 0.7 | 0.7 |
| | | (C-2) | | | | | | | | | |
| | | (C-3) | 0.7 | | | | | | | | |
| | Organic solvent (butyl cellosolve acetate) | | | 21 | 21 | 21 | 22 | | | | |
| | Organic solvent (propylene glycol monomethyl ether acetate) | | 20 | | | | | 20 | 24 | 22 | 21 |
| Curing agent | Water-dispersible polyisocyanate (B) | (B-1) | | 31 | 30 | 30 | 26 | 33 | 21 | 28 | 31 |
| | | (B-2) | 34 | | | | | | | | |
| Total solid mass of (A) and (B) | | | 100.0 | 100.0 | 100.0 | 100.0 | 100.0 | 100.0 | 100.0 | 100.0 | 100.0 |
| Mixing ratio of base component to curing agent (base component : curing agent) | | | 72 : 28 | 69 : 31 | 70 : 30 | 70 : 30 | 74 : 26 | 67 : 33 | 79 : 21 | 72 : 28 | 69 : 31 |
| Mass ratio of (A1) to (A2) (A1) : (A2) | | | 64 : 36 | 65 : 35 | 74 : 26 | 74 : 26 | 45 : 55 | 100 : 0 | 0 : 100 | 74 : 26 | 71 : 29 |
| Equivalent ratio of isocyanate groups of (B) to hydroxy groups of (A) (NCO/OH) | | | 1.3 | 1.1 | 1.4 | 1.5 | 1.3 | 1.4 | 1.4 | 1.4 | 1.3 |
| Coating conditions (temperature °C/humidity % RH) | | 25°C/50% | | | | | 25°C/50% | | | | |
| Coating workability | Sagging limit film thickness | ⊙ | ⊙ | ⊙ | o | o | × | ⊙ | Δ | Δ | |
| | Popping limit film thickness | ⊙ | ⊙ | ⊙ | o | o | × | ⊙ | × | × | |
| 20° Gloss value | | O | O | Δ | ⊙ | Δ | ⊙ | × | O | O | |
| Transparency of coating film | | O | O | O | O | Δ | ⊙ | × | O | O | |
| Water resistance | | O | O | Δ | ⊙ | Δ | ⊙ | × | O | O | |

Details of the starting materials of each component used are as follows.

### Acrylic resin dispersion (A1)

(A1-1): BURNOCK WD-551; manufactured by DIC Corporation, acid value: 8.5 mg KOH/g, hydroxy value: 100 mg KOH/g, number-average molecular weight: 4,600, solid concentration: 44% by mass.

(A1-2): Bayhydrol A2470; manufactured by Sumika Covestro Urethane Co., Ltd., acid value: 20 mg KOH/g, hydroxy value: 129 mg KOH/g, number-average molecular weight: 4,300, solid concentration: 45% by mass.

(A1-3): MACRYNAL VSM 6299W/42WA; manufactured by Allnex, acid value: 25 mg KOH/g, hydroxy value: 135 mg KOH/g, number-average molecular weight: 6,500, solid concentration: 42% by mass.

### Water-dispersible polyisocyanate (B)

(B-1): Bayhydur XP2655; manufactured by Sumika Covestro Urethane Co., Ltd., ion-modified polyisocyanate (HDI trimer with sulfonic acid salt groups introduced by addition), solid concentration: 100% by mass.

(B-2): Bayhydur 3100; manufactured by Sumika Covestro Urethane Co., Ltd., hydrophilic polyisocyanate (HDI), solid concentration: 100% by mass.

### Viscosity modifier (C)

(C-1): NOPAL L3303; manufactured by SAN NOPCO Ltd., urethane type viscosity modifier, solid concentration: 15% by mass.

(C-2): AQUATIX 8421; manufactured by BYK, wax type viscosity modifier, solid concentration: 20% by mass.

(C-3): AQ630; manufactured by Kusumoto Chemicals, Ltd., amide type viscosity modifier, solid concentration: 18% by mass.

All of the aqueous coating compositions of Examples had a large sagging generation limit film thickness and good coating workability. Also, all the coating films formed by using the aqueous coating composition of Examples were confirmed to have a good coating film appearance. Further, as shown in Examples 1 to 14, when the aqueous coating compositions of Examples were used, it was confirmed that the sagging generation limit film thickness was large, the coating workability was good, and the coating film appearance was good under any coating conditions such as suitable temperature and suitable humidity (Examples 1 and 4 to 14), a poor drying condition with low temperature and high humidity (Example 2), and a rapid drying condition with high temperature and low humidity (Example 3). From this result, it can be seen that the above-described aqueous coating composition can achieve both coating workability and finished appearance of a coating film at a high level under a wide range of coating environments.

Comparative Example 1 is an example where no emulsion of an acrylic resin (A2) having a hydrophobic alkyl group with 4 to 6 carbon atoms was contained. In this example, the sagging limit film thickness of the coating composition was small.

Comparative Example 2 is an example where only an emulsion of an acrylic resin (A2) having a hydrophobic alkyl group with 4 to 6 carbon atoms and no acrylic resin dispersion (A1) were contained. In this example, the sagging limit film thickness was large but the gloss, the water resistance and the transparency of the obtained coating film were low.

Comparative Example 3 is an example where the acrylic resin emulsion (A2) was polymerized using a (meth)acrylate monomer having an alkyl group with 3 or less carbon atoms instead of a (meth)acrylate monomer containing a hydrophobic alkyl group with 4 to 6 carbon atoms and the acrylic resin emulsion was blended with an acrylic resin dispersion (A1) in a mass ratio of A1 : A2 = 72 : 28. In this example, that the sagging limit film thickness of the coating composition was small.

Comparative Example 4 is an example where the acrylic resin emulsion (A2) was polymerized using 73.9 parts by mass of a monomer having an alkyl group with 7 or more carbon atoms instead of a (meth)acrylate monomer containing a hydrophobic alkyl group with 4 to 6 carbon atoms and the acrylic resin emulsion was blended with an acrylic resin dispersion (A1) in a mass ratio of A1 : A2 = 71 : 29. In this example, the sagging limit film thickness was small.

### INDUSTRIAL APPLICABILITY

The above-described aqueous coating composition has advantages of good coating workability because it can effectively prevent the sagging generation after its application, and further, of being capable of maintaining the appearance of a resultant coating film (performance to prevent the bubbles generation, gloss value, and the like) at a high level.

## Claims

1. An aqueous coating composition comprising an aqueous base component (I) and a water-dispersible curing agent (II),
wherein the aqueous base component (I) comprises an aqueous hydroxy group-containing resin dispersion (A),
wherein the water-dispersible curing agent (II) comprises a water-dispersible polyisocyanate (B), and
wherein the aqueous hydroxy group-containing resin dispersion (A) comprises
an acrylic resin dispersion (A1) and
an emulsion of an acrylic resin (A2) having a hydrophobic linear alkyl, branched alkyl, or alicyclic alkyl group with 4 to 6 carbon atoms.

2. The aqueous coating composition according to claim 1, wherein
the emulsion of the acrylic resin (A2) is an emulsion polymer of a monomer mixture comprising a (meth)acrylate monomer having a hydrophobic linear alkyl, branched alkyl, or alicyclic alkyl group with 4 to 6 carbon atoms.

3. The aqueous coating composition according to claim 2, wherein
the amount of the (meth)acrylate monomer having a hydrophobic linear alkyl, branched alkyl, or alicyclic alkyl group with 4 to 6 carbon atoms is in the range of 10 to 80 parts by mass per 100 parts by mass of the monomer mixture.

4. The aqueous coating composition according to any one of claims 1 to 3, wherein
the acrylic resin dispersion (A1) has a hydroxy value in the range of 5 to 200 mg KOH/g, an acid value in the range of 5 to 100 mg KOH/g, and a number-average molecular weight in the range of 1,000 to 100,000.

5. The aqueous coating composition according to any one of claims 1 to 4, wherein
the resin solid mass ratio of the acrylic resin dispersion (A1) to the emulsion of the acrylic resin (A2) is in the range of (A1) : (A2) = 95 : 5 to 50 : 50.

6. The aqueous coating composition according to any one of claims 1 to 5, wherein
at least one of the aqueous base component (I) and the water-dispersible curing agent (II) further comprises a viscosity modifier (C).

7. A method for forming a coating film comprising a step of forming a coating film by applying the aqueous coating composition according to any one of claims 1 to 6 to an article and curing the aqueous coating composition.

8. The method for forming a coating film according to claim 7, wherein the article is an industrial machine, a construction machine, a railroad vehicle, a hull, a building or a constructed structure.
